# EUROPÄISCHE PATENTSCHRIFT

(11) **EP 3 235 021 B1**
(45) Veröffentlichungstag und Bekanntmachung des Hinweises auf die Patenterteilung: **09.01.2019**
(21) Anmeldenummer: 15790140.6
(22) Anmeldetag: 05.11.2015
(51) Int. Cl.: H01M 2/02

(54) **BATTERIEGEHÄUSETEIL FÜR EINE TRAKTIONSBATTERIE EINES ELEKTRO- ODER HYBRIDFAHRZEUGS UND BATTERIEGEHÄUSE**
BATTERY HOUSING PART FOR A TRACTION BATTERY OF AN ELECTRIC OR HYBRID VEHICLE AND BATTERY HOUSING
PIÈCE DE BOÎTIER DE BATTERIE POUR UNE BATTERIE DE TRACTION D'UN VÉHICULE ÉLECTRIQUE OU HYBRIDE ET BOÎTIER DE BATTERIE

(30) Priorität: 19.12.2014 DE 102014226597; 05.03.2015 DE 102015203952
(43) Veröffentlichungstag der Anmeldung: 25.10.2017
(73) Patentinhaber: Volkswagen Aktiengesellschaft, 38440 Wolfsburg (DE)
(72) Erfinder: WEBER, Alexandra, 38102 Braunschweig (DE); BECKER, Bendix, 18196 Dummerstorf (DE); GLAUBITZ, Florian, 38176 Wendeburg (DE)
(86) Internationale Anmeldenummer: PCT/EP2015/075764
(87) Internationale Veröffentlichungsnummer: WO 2016/096236

(56) Entgegenhaltungen:
- DE-A1-102010 014 905
- JP-A- S62 115 647
- US-A- 2 427 639

## Beschreibung

Die vorliegende Erfindung betrifft ein Batteriegehäuseteil für eine Traktionsbatterie eines Elektro- oder Hybridfahrzeugs sowie ein Batteriegehäuse.

Die DE 10 2013 112 413 A1 betrifft ein Batteriegehäuseteil für eine Traktionsbatterie eines Elektrofahrzeugs, in welchem die Traktionsbatterie aufnehmbar ist, wobei das Batteriegehäuseteil aus einem thermoplastischen oder duroplastischen Kunststoffmaterial besteht.

Werden derartige Batteriegehäuseteile aus einem Kunststoff hergestellt, so besteht insbesondere bei den Batteriegehäuseteilen, die Traktionsbatterie bzw. Traktionsbatterien halten und tragen die Herausforderung, eine ausreichende Steifigkeit des Batteriegehäuseteils herzustellen und die Batterie im Crashfall vor Beschädigungen zu schützen.

Die US 2 427 639 A beschreibt einen mittels Metalleinlage verstärkten Batteriebehälter, wobei besagte Metalleinlage mit Kunststoffmasse bedeckt ist.

Aus der JP S62 115647 A ist ein Batteriebehälter aus einem thermoplastischen Harz, wie Polypropylen (PP), bekannt. Auf einer Seitenfläche des Behälters ist eine kreuzförmige Verstärkungsrippe angeordnet, welche durch vorheriges Einsetzen eines Eisenkerns in das Innere der Seitenfläche aus Polypropylen gebildet wird.

Vor diesem Hintergrund liegt der vorliegenden Erfindung die Aufgabe zugrunde, ein Batteriegehäuseteil für eine Traktionsbatterie eines Elektro- oder Hybridfahrzeugs sowie ein Batteriegehäuse auszubilden, das eine hohe Steifigkeit aufweist und die Batterie vor Beschädigungen im Crashfall schützt.

Ausgehend von einem Batteriegehäuseteil für eine Traktionsbatterie eines Elektro- oder Hybridfahrzeugs, wobei ein erster Teilbereich des Batteriegehäuseteils aus einem Kunststoff und zumindest ein zweiter Teilbereich aus einem davon verschiedenen Werkstoff ausgebildet ist, wird die gestellte Aufgabe dadurch gelöst, dass zumindest an einem Abschnitt des Umfangs des Batteriegehäuseteils als Kantenschutz für dasselbe zumindest ein rahmenförmiges Verstärkungsbauteil vorgesehen ist, das aus einem anderen Werkstoff als das Batteriegehäuseteil besteht, wobei das Verstärkungsbauteil im Querschnitt gesehen einen dreieckförmigen Abschnitt mit einer Abschrägung sowie mit einem sich daran anschließenden Stegabschnitt aufweist.

Auf diese Weise lässt sich eine hohe Steifigkeit des Batteriegehäuseteils bei gleichzeitig geringem Gewicht erzielen. Durch die hohe Steifigkeit des Batteriegehäuseteils wird die Batterie, beispielsweise eine Hochvoltbatterie - auch als HV-Batterie bezeichnet - mit einer Mehrzahl von Batteriemodulen und einer Vielzahl von Batteriezellen auch im Crashfall wirksam vor Beschädigungen geschützt. Der oder die zweiten Teilbereiche aus einem andersartigen Werkstoff können gezielt dort vorgesehen werden, wo sie den größten Vorteil hinsichtlich der Steifigkeit des Batteriegehäuseteils ermöglichen. Die Verwendung eines Kunststoffs für Teilbereiche des Batteriegehäuseteils ermöglicht es, dessen Gewicht trotz Zugewinns an Stabilität gering zu halten.

Vorteilhafterweise wird ein solches Batteriegehäuseteil als Bestandteil eines Batteriegehäuses für eine Traktionsbatterie eines Elektro- oder Hybridfahrzeugs verwendet, das beispielsweise noch als weiteren Bestandteil einen Gehäusedeckel oder ähnliches aufweist.

Vorteilhafte Weiterbildungen und Verbesserungen der Erfindung sind in den Unteransprüchen angegeben.

Für eine einfache und kostengünstige Herstellung dieses Verstärkungsbauteils ist es von Vorteil, wenn das Verstärkungsbauteil aus einem Strangpressprofil ausgebildet ist. Beispielsweise können hierzu Aluminium-Strangpressprofile verwendet werden, die grundsätzlich handelsüblich und gegebenenfalls in ihrem Querschnitt entsprechend angepasst sind.

Um das Verstärkungselement einfach und sicher an dem Batteriegehäuseteil zu halten und zu fixieren, ist es vorteilhaft, wenn das Verstärkungsbauteil mittels einer mechanischen Verbindung und/oder durch Umspritzen an dem Batteriegehäuseteil gehalten ist.

Ggf. zusätzlich zu einem solchen rahmenförmigen Verstärkungselement, kann das Batteriegehäuseteil zumindest ein im Wesentlichen ebenes Plattenelement aufweisen, das aus einem anderen Werkstoff als das Batteriegehäuseteil besteht. Beispielsweise können die Flächen, auf denen die HV-Batterie bzw. die einzelnen Batteriemodule stehen und befestigt sind, durch solche im Wesentlichen ebene Plattenelemente in Form von Einlegeplatten gebildet sein.

Dabei ist es für eine hohe Steifigkeit des Batteriegehäuseteils von Vorteil, wenn das zumindest eine Verstärkungsbauteil und/oder das zumindest eine Plattenelement aus einem metallischen Werkstoff und/oder faserverstärkten Kunststoff und/oder einem Organoblech besteht. Von Vorteil ist es ebenfalls, wenn in dem Batteriegehäuseteil ein textiles Flächenhalbzeug integriert ist, das vorzugsweise Glasfasern und/oder Kohlenstofffasern und/oder Metallfasern und/oder metallisch bedampften Fasern aufweist. Vorteilhafte Ausführungsbespiele der Erfindung sind in der Zeichnung vereinfacht dargestellt und in der nachfolgenden Beschreibung näher erläutert.

### Es zeigen

Fig. 1 ein erstes Ausführungsbeispiel eines erfindungsgemäßen Batteriegehäuseteils mit zwei rahmenförmigen Verstärkungsbauteilen,
Fig. 2 eine zweite Darstellung des ersten erfindungsgemäßen Ausführungsbeispiels mit zwei rahmenförmigen Verstärkungsbauteilen, in der das Batteriegehäuseteil teilweise durchscheinend dargestellt ist,
Fig. 3 eine Schnittdarstellung eines rahmenförmigen Verstärkungsbauteils,
Fig. 4 eine Teilansicht eines rahmenförmigen Verstärkungsbauteils,
Fig. 5 zwei rahmenförmige Verstärkungsbauteile in einer Draufsicht,
Fig. 6 eine Schnittdarstellung eines in dem erfindungsgemäßen Batteriegehäuseteil eingefügten rahmenförmigen Verstärkungsbauteils,
Fig. 7 bis 9 verschiedene Anordnungen zum Befestigen eines Verstärkungsbauteils an dem Batteriegehäuseteil,
Fig. 10 ein zweites Ausführungsbeispiel eines erfindungsgemäßen Batteriegehäuseteils mit zwei im Wesentlichen ebenen Plattenelementen in teilweise durchscheinender Darstellung,
Fig. 11 eine Schnittdarstellung des zweiten erfindungsgemäßen Ausführungsbeispiels mit einer Fügeverbindung von Batteriegehäuseteil und Plattenelement,
Fig. 12 und Fig. 13 beispielhafte Darstellungen von Plattenelementen in einer Draufsicht,
Fig. 14 ein drittes Ausführungsbeispiel eines erfindungsgemäßen Batteriegehäuseteils mit einem integrierten textilen Flächenhalbzeug in teilweise durchscheinender Darstellung,
Fig. 15 ein textiles Flächenhalbzeug und
Fig. 16 ein zu einem Formkörper umgeformtes textiles Flächenhalbzeug.

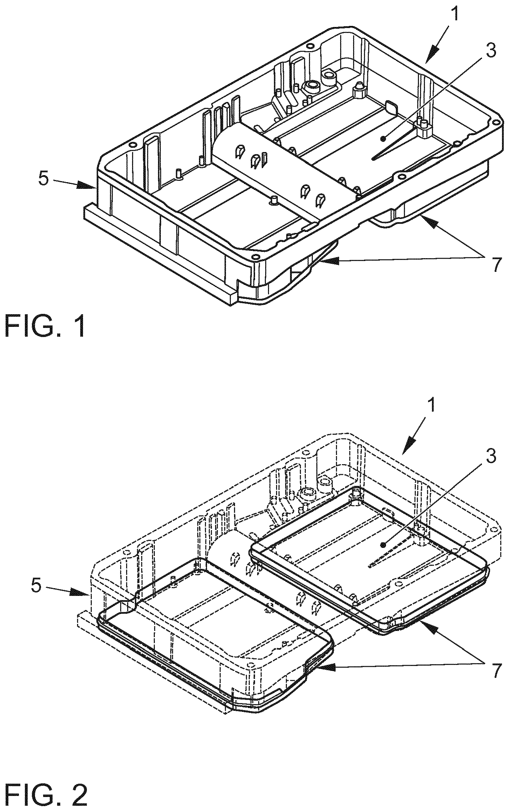

Die in den Figuren 1 bis 16 dargestellten Ausführungsbeispiele betreffen ein Batteriegehäuseteil 1, dass bei den Ausführungsbeispielen in Form einer nach oben hin offenen Batterieschale oder Batteriewanne mit einem Gehäuseboden 3 und einer umlaufenden, flanschartigen Gehäusewandung 5 als Rand ausgebildet ist. Diese kann aber auch als Batterietrog oder Batteriebox bezeichnet werden. Zur Reduzierung des Gewichts des Batteriegehäuseteils 1 wird auf einen großen Anteil an Thermoplast oder Duroplast als Werkstoff für das Batteriegehäuseteil 1 zurückgegriffen. Zur Bildung eines geschlossenen Batteriegehäuses kann das wannen- oder schalenförmige Batteriegehäuseteil 1 mit einem Deckel z.B. in Form eines ggf. tiefgezogenen Aluminiumblechs versehen und zur Abdichtung zwischen diesen Bauteilen mit einer Flüssigdichtung versehen sein.

Wie in den Figuren 1 bis 6 dargestellt ist, können gemäß eines ersten Ausführungsbeispiels zur Erhöhung der Steifigkeit und dem Schutz des Batteriegehäuseteils 1 im Falle eines Crashs rahmenförmige Verstärkungsbauteile 7 verwendet werden. Diese Verstärkungsbauteile 7 sind beispielsweise aus einem Strangpressprofil aus Metall, vorzugsweise einem Leichtmetall wie Aluminium, durch Umformen, beispielsweise Biegen, zu einem umlaufenden bzw. geschlossenen Rahmen geformt und anschließend endseitig verschweißt. Ein solches rahmenförmiges Verstärkungsbauteil 7 leistet einen erheblichen Beitrag zur Steifigkeitserhöhung des Batteriegehäuseteils 1. Alternativ können die Verstärkungsbauteile 7 auch durch einzelne Teilstücke, die an ihren Enden miteinander durch Schweißen oder Zwischenelemente verbunden werden, gebildet sein. Auch eine Zweiteilung des oder der in Form eines Rahmens ausgebildeten Verstärkungsbauteile 7 wäre denkbar, so dass die Strangpressprofile in U-Form gebogen werden. Es ist aber auch möglich, stangenförmige gerade Verstärkungselemente 7 zu verwenden.

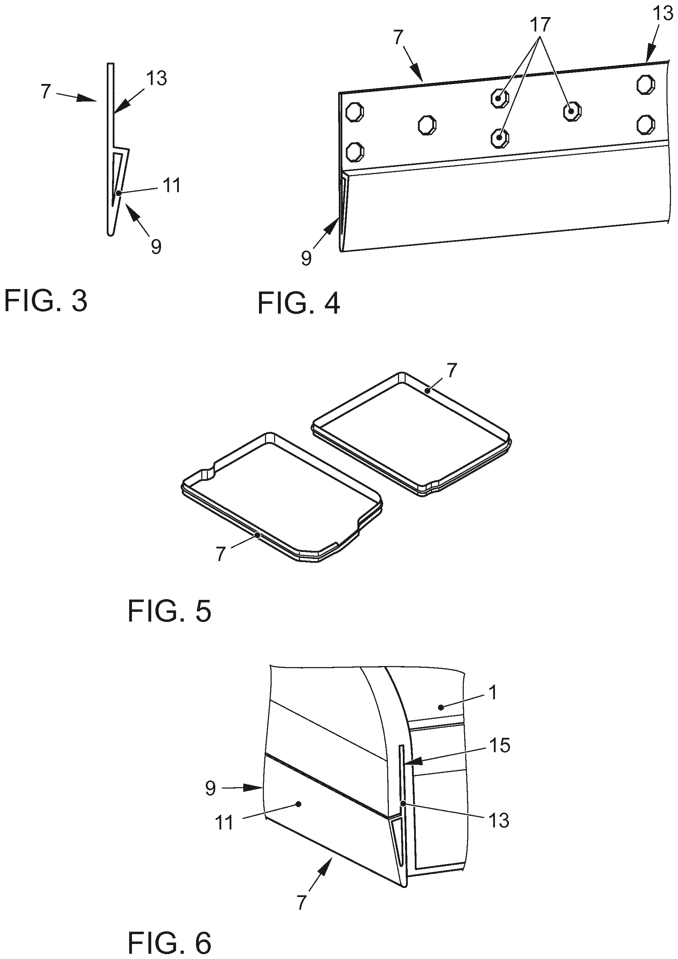

Zur Erhöhung der mechanischen Steifigkeit des Batteriegehäuseteils 1 sind bei den dargestellten Ausführungsbeispielen die beiden rahmenförmigen Verstärkungsbauteile 7 mit dem Batteriegehäuseteils 1 vorzugsweise fest verbunden. Aus diesem Grund und um die rahmenförmigen Verstärkungsbauteile 7 gut in das Batteriegehäuseteil 1 zu integrieren und diesem eine hohe Steifigkeit zu verleihen, besitzen die Verstärkungsbauteile 7 , wie in den Figuren 3, 4 und 6 zu erkennen ist, einen dreieckförmigen Abschnitt 9 mit einer Abschrägung 11 sowie einem sich daran anschließenden Stegabschnitt 13. Die Gestaltung des dreieckförmigen Abschnitts 9 zielt auf ein Vermeiden einer Beschädigung des Batteriegehäuseteils 1 im Falle eines Seitencrashs ab. Wie die Fig. 6 zeigt, bilden der dreieckförmigen Abschnitt 9 der rahmenförmigen Verstärkungsbauteile 7 einen Kantenschutz für das Batteriegehäuseteil 1. Mit seinem Stegabschnitt 13 wird das Verstärkungsbauteil in einer entsprechenden umlaufenden Nut 15 des Batteriegehäuseteils 1 gehalten.

Die Fig. 4 zeigt eine Teilansicht eines beispielsweise aus einem Strangpressprofil ausgebildeten Verstärkungsbauteils 7 mit Ausnehmungen 17, die am einfachsten z.B. durch Stanzen von Durchgangsöffnungen im Stegabschnitt 13 ausgebildet sind. Diese Ausnehmungen 17 dienen dazu, einen Formschluss zwischen dem Verstärkungsbauteil 7 und dem Kunststoffmaterial des Batteriegehäuseteils 1 zu erzielen. Wird das Batteriegehäuseteil 1 z.B. im Spritzgussverfahren hergestellt, so fließt beim Umspritzen der Verstärkungsbauteile 7 mit Kunststoff Kunststoffmaterial in die Ausnehmungen 17 und es entsteht beim Aushärten ein Formschluss.

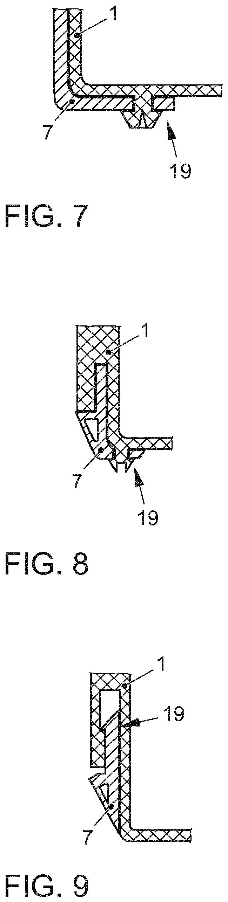

Alternativ oder zusätzlich zu den Ausnehmungen 17 oder Durchgangsöffnungen am Stegabschnitt 13 kann das Verstärkungsbauteil 7 auch mittels Clipsverbindungen 19 nachträglich an dem ansonsten fertigen Batteriegehäuseteil 1 befestigt werden. Ausführungsbeispiele solcher Clipsverbindungen 19 zwischen Verstärkungsbauteil 7 und Batteriegehäuseteil 1 in Form von druckknopfartigen Druckverrastungen oder anderen Rastnasen sind in den Figuren 7 bis 9 dargestellt, wobei weitere Gestaltungen denkbar sind. Ebenfalls möglich ist es, das Verstärkungsbauteil 7 z.B. durch Heißverstemmen an dem Batteriegehäuseteil zu fixieren.

Ebenfalls möglich ist es, anstatt des Einlegens und Umspritzens des Verstärkungsbauteils 7 zuerst das Batteriegehäuseteil 1 herzustellen und in dem Batteriegehäuseteil 1 eine Nut 15 für den Stegabschnitt 13 des Verstärkungsbauteils 7 vorzusehen. Das rahmenförmige gebogene Verstärkungsbauteil 7 kann dann mit dem Stegabschnitt 13 nachträglich in die Nut 15 eingeschoben und durch Einkleben stoffschlüssig oder aber durch Schrauben, Nieten, etc. formschlüssig fixiert werden.

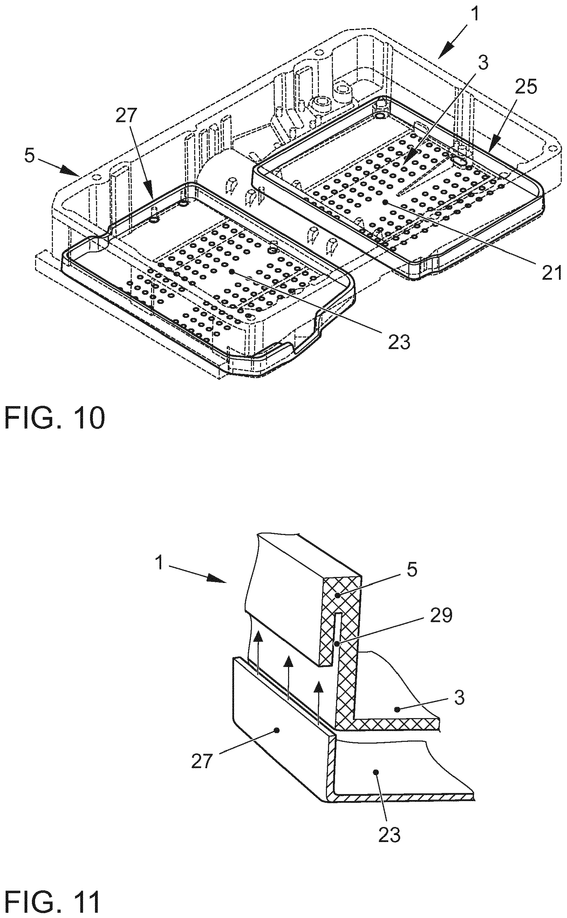

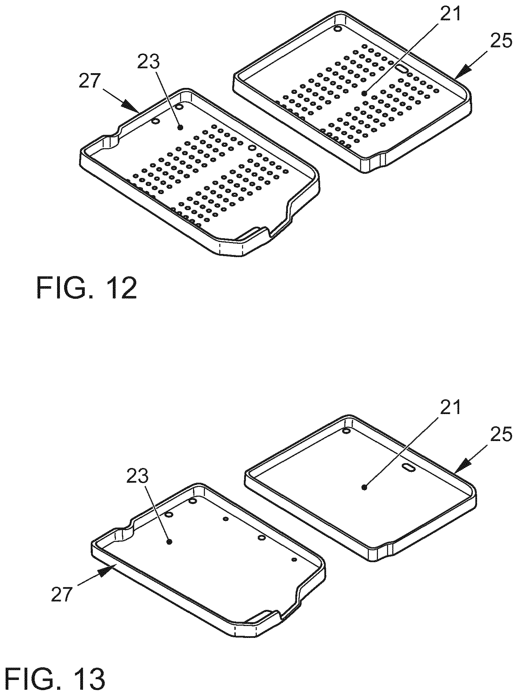

Ein zweites Ausführungsbeispiel eines Batteriegehäuseteils 1 mit zwei im Wesentlichen ebenen Plattenelementen 21 und 23 ist in den Fig. 10 bis 13 dargestellt. Zur Reduzierung des Gewichts ist das Batteriegehäuseteil 1 wiederum im Wesentlichen aus einem Thermoplast ausgebildet. Zur Erhöhung der Steifigkeit und des Schutzes des Batteriegehäuseteils 1 im Falle eines Crashs werden zur Verstärkung flächige Plattenelemente 21 und 23 als Teil des Gehäusebodens 3 verwendet, die beispielsweise jeweils einen im Wesentlichen umlaufenden Steg 25 bzw. 27 aufweisen und dadurch auch eine Wannenform haben können. Als Plattenelemente 21 und 23 können z.B. Bleche, die im Tiefziehprozess umgeformt wurden, zum Einsatz kommen. Die in den Figuren 10 und 12 vorgesehene Perforierung der Plattenelementen 21 und 23 dient dazu, dass bei der Herstellung des Batteriegehäuseteils 1 aus einem Kunststoff und dem Umspritzen der Plattenelementen 21 und 23 ein Formschluss zwischen dem Batteriegehäuseteil 1 und den Plattenelementen 21 und 23 entsteht.

Ebenso ist es möglich, die Plattenelementen 21 und 23 nachträglich mit dem Batteriegehäuseteils 1 zu verbinden. Zu diesem Zweck ist es möglich, die Plattenelemente 21 und 23 von oben in das Batteriegehäuseteil 1 einzulegen oder, wie in der Fig. 11 dargestellt, von unten mit dem Batteriegehäuseteil 1 zu verbinden. Eine mögliche Montagerichtung ist in der Fig. 11 durch Pfeile angedeutet. Hierzu ist beispielsweise eine im Querschnitt nutförmige, bezogen auf das Batteriegehäuseteil 1 ringförmig umlaufende Ausnehmung 29 im Bereich des Gehäusebodens 3 des Batteriegehäuseteils 1 vorgesehen. Die Verbindung der Plattenelementen 21 und 23 mit dem Batteriegehäuseteil 1 kann in diesem Fall z.B. stoffschlüssig durch Kleben oder formschlüssig durch z.B. Stifte, Nieten, Schrauben und andere Befestigungsmittel erfolgen.

Aus Dichtigkeitsgründen ist es von Vorteil, eine geschlossene Kunststofffläche im Inneren des Batteriegehäuseteils 1 vorzusehen. Zur Versteifung des Batteriegehäuseteils 1 können zudem bei allen dargestellten Ausführungsbeispielen am Gehäuseboden 3 Sicken, Rippen oder andere Versteifungsmaßnahmen zweckmäßigerweise mitangespritzt sein.

Wie in der Fig. 13 dargestellt ist, können alternativ die Plattenelemente 21 und 23 aus Organoblech oder einem anderen flächigen textilen Halbzeug hergestellt sein. Diese können auf gleiche Weise wie beschrieben in den Gehäuseboden 3 des Batteriegehäuseteils 1 integriert sein.

Organobleche sind Faser-Matrix-Halbzeuge, die aus einem Fasergewebe oder einem Fasergelege bestehen, die in eine thermoplastische Kunststoffmatrix eingebettet sind. Die Vorteile einer thermoplastischen Matrix liegen in der Warmumformfähigkeit der Halbzeuge und den daraus resultierenden kurzen Prozesszeiten. Häufig verwendete Faserwerkstoffe sind Glas, Aramid und Kohlenstoff. Bei Geweben und Gelegen können die Fasern auch rechtwinklig zueinander verlaufen, so dass die mechanischen Eigenschaften von Organoblechen wie Steifigkeit, Festigkeit und Wärmeausdehnung besser als bei metallischen Blechen sein können.

Besonders vorteilhaft ist es, wenn das Organoblech als Matrixwerkstoff aus dem gleichen oder einem vergleichbaren Kunststoff wie das z.B. später im Spritzguss ausgebildete Gehäusebauteil 1 ausgebildet ist. Auf diese Weise stellt sich ein Stoffschluss beim Umspritzen ein, so dass Dichtigkeitsanforderungen auf einfache Weise erfüllt werden können und der Bodenbereich des Batteriegehäuseteils 1 nicht durch weiteres Kunststoffmaterial gefüllt werden muss. Diesem Gedanken folgend ist es sogar möglich, nur die umlaufende Gehäusewandung 5 des Batteriegehäuseteils 1 sowie die Anschlüsse an das Organoblech anzuspritzen. Bei einem Entfall eines flächigen Umspritzens des Gehäusebodens 3 kann eine Spritzgussmaschine mit einer geringeren Schließkraft verwendet werden. Dies reduziert den Bedarf an Ressourcen und Energie.

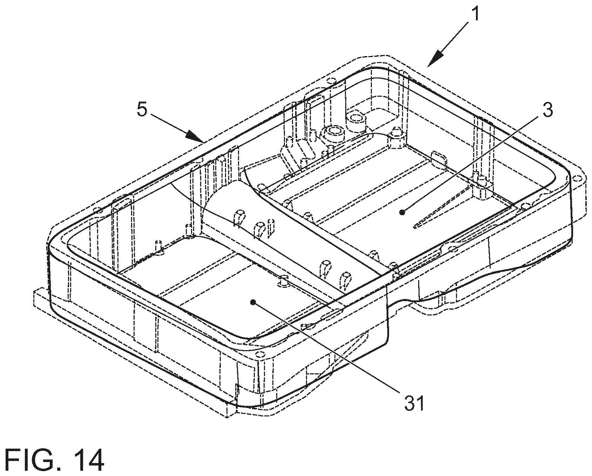

Ein drittes Ausführungsbeispiel eines Batteriegehäuseteils 1 mit einem integrierten textilen Flächenhalbzeug 31 ist in den Fig. 14 bis 16 dargestellt.

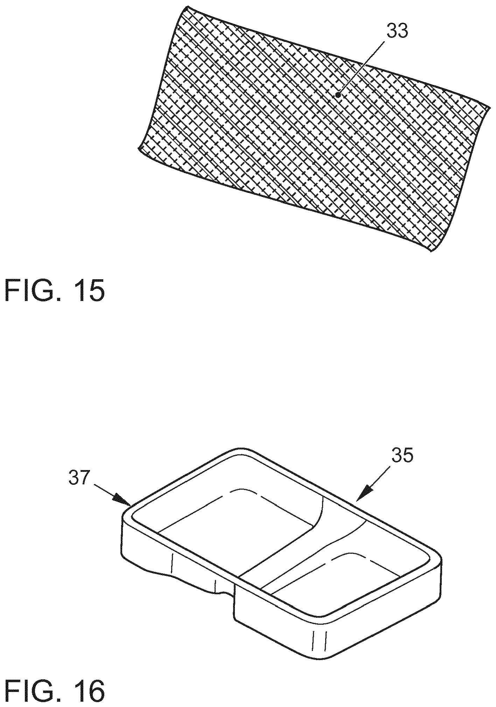

Bei dem textilen Flächenhalbzeug 31 handelt sich z.B., wie in der Fig. 15 dargestellt, um ein Gelege oder Gewebe 33 aus Glasfasern, Kohlenstofffasern, Metallfasern, metallisch bedampfte Fasern oder ähnliches. Dieses Gelege oder Gewebe 33 wird bei dem dargestellten Ausführungsbeispiel zunächst einem Umformprozess, z.B. einem Pressverfahren unterworfen, bei dem, wie in der Fig. 16 dargestellt ist, ein Formkörper 35 mit einem umlaufenden Rand 37 ausgebildet werden kann. Beim anschließenden Herstellen des Batteriegehäuseteils 1 wird der Formkörper 35 in ein Werkzeug eingelegt und vom Kunststoffmaterial umspritzt. Auf diese Weise wird der aus einem Gelege oder Gewebe 33 aus Fasern bestehende Formkörper 35 in das Batteriegehäuseteil 1 integriert. Von besonderem Vorteil ist bei diesem Ausführungsbeispiel neben der Erhöhung der Steifigkeit die verbesserte Schlagzähigkeit sowie eine Umsetzung des EMV (Elektromagnetische Verträglichkeit) -Schutzes z.B. durch die Verwendung von Metallfasern oder metallisch bedampften Fasern.

Grundsätzlich ist aber ebenfalls eine Bedampfung des Gehäusebauteils 1 mit einem Metall zur Sicherstellung eines ausreichenden EMV-Schutzes möglich.

Der umlaufende Rand 37 des Formkörpers 35 kann aber auch in einem nachfolgenden Prozess z.B. im Urformen hergestellt werden.

Die vorliegende Erfindung umfasst die Kombination beliebiger in der Beschreibung, den Patentansprüchen und den Figuren offenbarten Merkmale.

### Bezugszeichenliste

- 1: Batteriegehäuseteil
- 3: Gehäuseboden
- 5: Gehäusewandung
- 7: rahmenförmiges Verstärkungsbauteil
- 9: dreieckförmiger Abschnitt
- 11: Abschrägung
- 13: Stegabschnitt
- 15: Nut
- 17: Ausnehmung
- 19: Clipsverbindung
- 21: Plattenelement
- 23: Plattenelement
- 25: Steg
- 27: Steg
- 29: Ausnehmung
- 31: Flächenhalbzeug
- 33: Gelege oder Gewebe
- 35: Formkörper
- 37: Rand

## Patentansprüche

1. Batteriegehäuseteil (1) für eine Traktionsbatterie eines Elektro- oder Hybridfahrzeugs, wobei ein erster Teilbereich des Batteriegehäuseteils (1) aus einem Kunststoff und zumindest ein zweiter Teilbereich aus einem davon verschiedenen Werkstoff ausgebildet ist, **dadurch gekennzeichnet, dass** zumindest an einem Abschnitt des Umfangs des Batteriegehäuseteils (1) als Kantenschutz für dasselbe zumindest ein rahmenförmiges Verstärkungsbauteil (7) vorgesehen ist, das aus einem anderen Werkstoff als das Batteriegehäuseteil (1) besteht, wobei das Verstärkungsbauteil (7) im Querschnitt gesehen einen dreieckförmigen Abschnitt (9) mit einer Abschrägung (11) sowie mit einem sich daran anschließenden Stegabschnitt (13) aufweist.

2. Batteriegehäuseteil (1) nach Anspruch 1, **dadurch gekennzeichnet, dass** das Verstärkungsbauteil (7) aus einem Strangpressprofil ausgebildet ist.

3. Batteriegehäuseteil (1) nach Anspruch 2, **dadurch gekennzeichnet, dass** das Verstärkungsbauteil (7) mittels einer mechanischen Verbindung und/oder durch Umspritzen an dem Batteriegehäuseteil (1) gehalten ist.

4. Batteriegehäuseteil (1) nach einem der Ansprüche 1 bis 3, **dadurch gekennzeichnet, dass** das Batteriegehäuseteil (1) zumindest ein im Wesentlichen ebenes Plattenelement (21, 23) aufweist, dass zumindest teilweise aus einem anderen Werkstoff als das Batteriegehäuseteil (1) besteht.

5. Batteriegehäuseteil (1) nach einem der Ansprüche 1 bis 4, **dadurch gekennzeichnet, dass** das zumindest eine Verstärkungsbauteil (7) und/oder das zumindest eine Plattenelement (21, 23) aus einem metallischen Werkstoff und/oder faserverstärkten Kunststoff und/oder einem Organoblech besteht.

6. Batteriegehäuseteil (1) nach einem der Ansprüche 1 bis 5, **dadurch gekennzeichnet, dass** in dem Batteriegehäuseteil (1) ein textiles Flächenhalbzeug (31) integriert ist.

7. Batteriegehäuseteil (1) nach Anspruch 6, **dadurch gekennzeichnet, dass** das textile Flächenhalbzeug (31) Glasfasern und/oder Kohlenstofffasern und/oder Metallfasern und/oder metallisch bedampften Fasern aufweist.

8. Batteriegehäuse für eine Traktionsbatterie eines Elektro- oder Hybridfahrzeugs umfassend wenigstens ein Batteriegehäuseteil (1) nach einem der vorhergehenden Ansprüche.

## Claims

1. Battery housing part (1) for a traction battery of an electric or hybrid vehicle, wherein a first partial region of the battery housing part (1) is formed from a plastic and at least one second partial region is formed from a material different therefrom, **characterized in that** at least on a portion of the periphery of the battery housing part (1), as an edge protection for the same, at least one frame-like reinforcing component (7) is provided which consists of a different material from the battery housing part (1), wherein the reinforcing component (7), seen in cross section, has a triangular portion (9) with a chamfer (11) and with a web portion (13) adjoining this.

2. Battery housing part (1) according to Claim 1, **characterized in that** the reinforcing component (7) is made from an extruded profile.

3. Battery housing part (1) according to Claim 2, **characterized in that** the reinforcing component (7) is held on the battery housing part (1) by means of a mechanical connection and/or by extrusion molding.

4. Battery housing part (1) according to any of Claims 1 to 3, **characterized in that** the battery housing part (1) has at least one substantially flat plate element (21, 23) which consists at least partially of a material different from that of the battery housing part (1).

5. Battery housing part (1) according to any of Claims 1 to 4, **characterized in that** the at least one reinforcing component (7) and/or the at least one plate element (21, 23) consists of a metallic material and/or fiber-reinforced plastic and/or an organic sheet.

6. Battery housing part (1) according to any of Claims 1 to 5, **characterized in that** a textile planar semifinished product (31) is integrated in the battery housing part (1).

7. Battery housing part (1) according to Claim 6, **characterized in that** the textile planar semifinished product (31) comprises glass fibers and or carbon fibers and/or metal fibers and/or metallic sputter-coated fibers.

8. Battery housing for a traction battery of an electric or hybrid vehicle comprising at least one battery housing part (1) according to any of the preceding claims.

## Revendications

1. Partie de boîtier de batterie (1) pour une batterie de traction d'un véhicule électrique ou hybride, une première zone partielle de la partie de boîtier de batterie (1) étant constitué d'une matière plastique et au moins une deuxième zone partielle dans un matériau différent de celle-ci, **caractérisée par** la présence, au moins au niveau d'une portion du pourtour de la partie de boîtier de batterie (1) en tant que protection d'arête pour celle-ci, au moins un élément structural de renforcement (7) en forme de cadre qui se compose d'un matériau différent de ceux de la partie de boîtier de batterie (1), l'élément structural de renforcement (7), vue en section transversale, possédant une portion de forme triangulaire (9) pourvue d'un biseautage (11) ainsi qu'une portion d'élément jointif (13) qui se rattache à celle-ci.

2. Partie de boîtier de batterie (1) selon la revendication 1, **caractérisée en ce que** l'élément structural de renforcement (7) est réalisé à partir d'un profilé extrudé.

3. Partie de boîtier de batterie (1) selon la revendication 2, **caractérisée en ce que** l'élément structural de renforcement (7) est maintenu au moyen d'une liaison mécanique et/ou par surmoulage sur la partie de boîtier de batterie (1).

4. Partie de boîtier de batterie (1) selon l'une des revendications 1 à 3, **caractérisée en ce que** la partie de boîtier de batterie (1) possède au moins un élément en plaque (21, 23) sensiblement plan, lequel se compose au moins partiellement d'un matériau différent de ceux de la partie de boîtier de batterie (1).

5. Partie de boîtier de batterie (1) selon l'une des revendications 1 à 4, **caractérisée en ce que** l'au moins un élément structural de renforcement (7) et/ou l'au moins un élément en plaque (21, 23) se composent d'un matériau métallique et/ou de matière plastique renforcée de fibres et/ou d'une tôle organique.

6. Partie de boîtier de batterie (1) selon l'une des revendications 1 à 5, **caractérisée en ce qu'**un demi-produit surfacique textile (31) est intégré dans la partie de boîtier de batterie (1).

7. Partie de boîtier de batterie (1) selon la revendication 6, **caractérisée en ce que** le demi-produit surfacique textile (31) possède des fibres de verre et/ou des fibres de carbone et/ou des fibres métalliques et/ou des fibres métallisées sous vide.

8. Boîtier de batterie pour une batterie de traction d'un véhicule électrique ou hybride, comprenant au moins une partie de boîtier de batterie (1) selon l'une des revendications précédentes.
